# EUROPÄISCHE PATENTSCHRIFT

(11) **EP 0 870 670 B1**
(45) Veröffentlichungstag und Bekanntmachung des Hinweises auf die Patenterteilung: **30.05.2001**
(21) Anmeldenummer: 98105619.5
(22) Anmeldetag: 27.03.1998
(51) Int. Cl.: B62D 7/00, B60G 3/20

(54) **Radaufhängung für gepanzerte Fahrzeuge**
Wheel suspension for armoured vehicles
Suspension de roue pour véhicules blindés

(30) Priorität: 27.03.1997 DE 19713015
(43) Veröffentlichungstag der Anmeldung: 14.10.1998
(73) Patentinhaber: Rheinmetall Landsysteme GmbH, 24159 Kiel (DE)
(72) Erfinder: Ewald, Heinz, Dipl.-Ing., 34311 Naumburg (DE); Prummenbaum, Eric, Dipl.-Ing., 34119 Kassel (DE)
(74) Vertreter: Dietrich, Barbara

(56) Entgegenhaltungen:
- DE-A- 3 800 236
- DE-C- 969 375
- FR-A- 768 019
- FR-A- 1 096 872
- FR-A- 2 467 093
- US-A- 4 484 765
- US-A- 4 492 282

## Beschreibung

Die Erfindung betrifft eine Radaufhängung für gepanzerte Fahrzeuge mit einem unteren und einem oberen Führungslenker, die, durch einen Führungssteg verbunden, einen den Radkopf tragenden Führungsrahmen bilden gemäß Oberbegriff des Anspruchs 1.

Eine Einrichtung nach dem Oberbegriff des Anspruchs 1 ist aus der FR2 467 093 A bekannt.

Aus der DE 33 09 152 C2 ist eine unabhängige Radaufhängung für lenkbare Räder im Bereich eines Fahrzeugendes von Kraftfahrzeugen bekannt, bei der sich die Spurstange und der obere Führungslenker in Richtung des dem Rad nächstliegenden Fahrzeugendes im wesentlichen horizontal erstrecken und letzterer am Fahrzeugaufbau verschwenkbar ausgebildet ist. Mit einer solchen Radaufhängung wird in Abhängigkeit von den auf die Radaufhängung wirkenden Kräften eine Veränderung in der Radgeometrie hervorgerufen.

Der Erfindung liegt die Aufgabe zugrunde, eine Radaufhängung der eingangs genannten Art weiterzuentwickeln, so daß bei nur geringem Raumbedarf der Radaufhängung, Radbewegungen wie sie bei Ein- und Ausfedervorgängen auftreten, die Radgeometrie weitgehend unbeeinflußt lassen.

Diese Aufgabe wird erfindungsgemäß gelöst, indem der Führungssteg aus einem im unteren Führungslenker um eine horizontale Achse drehbar gelagerten Achskörper, einem auf dem Achskörper zur Erzielung von Lenkeinschlägen schwenkbaren, einen Radkopf tragenden Gelenkgehäuse und einem starr am Gelenkgehäuse angeordneten Verbindergehäuse, das einen nach innen ragenden, mit einem Lenkgestänge verbundenen Lenkhebel aufweist und die Verbindung zum oberen Führungslenker herstellt, gebildet ist.

Die Erfindung ist mit dem Vorteil einer durch Radbewegungen infolge von Federvorgängen und Lenkeinschlägen weitgehend unbeeinflußten Radgeometrie verbunden. Die Radaufhängung ermöglicht die Aufnahme auch hoher am Rad angreifender Kräfte.

Das Federungs- und das Dämpfungselement sind vorzugsweise als Baueinheit ausgeführt und greifen in Ausgestaltung der Erfindung am unteren Führungslenker an, so daß insbesondere die beim Einfedern des Rades auftretende Kräfte über die Befestigung des Federungs- und Dämpfungselements am Fahrzeuggrundkörper und über die Lagerung des unteren Führungslenkers auf direktem Weg ohne Einbeziehung weiterer Teile der Radaufhängung vom Fahrzeug aufgenommen werden.

Wird das Federungs- und/oder Dämpfungselement annähernd parallel zu den Führungslenkern angeordnet, ergibt sich ein günstiges Federungs- bzw. Dämpfungsverhalten auch bei geringer Längenausdehnung der Elemente.

In weiterer Ausgestaltung der Erfindung ist das Lenkgestänge zwischen den Führungslenkern angeordnet und verläuft annähernd parallel zu diesen. Es kann des weiteren vorteilhaft zwischen dem oberen Führungslenker und dem Federungs- und/oder Dämpfungselement angeordnet sein, so daß die Radführungskomponenten einen nur geringen Raumbedarf haben.

Weiterhin können in bevorzugter Ausführung der Erfindung die Führungslenker in unmittelbarer Nähe des Fahrzeuggrundkörpers angeordnet und schwenkbar sein, wobei der sich aus dem unteren Führungslenker auf die dem Fahrzeug abgewandte Seite desselben erstreckende Achskörper ein zur Realisierung von Lenkbewegungen schwenkbares Gelenkgehäuse trägt, an dem ein Verbindergehäuse mit auf den Fahrzeuggrundkörper gerichtetem Lenkhebel angeordnet ist.

Auch besteht die Möglichkeit, die Radaufhängung derart auszubilden, daß sich die Führungslenker, das Lenkgestänge und das Federungs- und/oder Dämpfungselement in einer im wesentlichen vertikal verlaufenden Ebene auf unterschiedlichen Höhenniveaus befinden.

Ist am Fahrzeuggrundkörper oberhalb des unteren Führungslenkers ein Anschlag vorgesehen, der mit einem am unteren Führungslenker angeordneten Steg zusammenwirkt, wird der Einfederweg begrenzt und die auf den Anschlag wirkende Kraft auf direktem Weg in den Fahrzeuggrundkörper eingeleitet. Dabei ist der Anschlag bevorzugt als Dämpfungselement mit progressiver Dämpfungskennlinie ausgeführt.

Die Erfindung soll nachfolgend anhand eines Ausführungsbeispieles näher erläutert werden.
Es zeigen
- Fig. 1,2 und 3: jeweils erfindungsgemäße Radaufhängungen in Vorder- und Seitenansicht sowie Draufsicht und
- Fig. 4: ein Detaildarstellung im Bereich des unteren Führungslenkers teilweise im Schnitt.

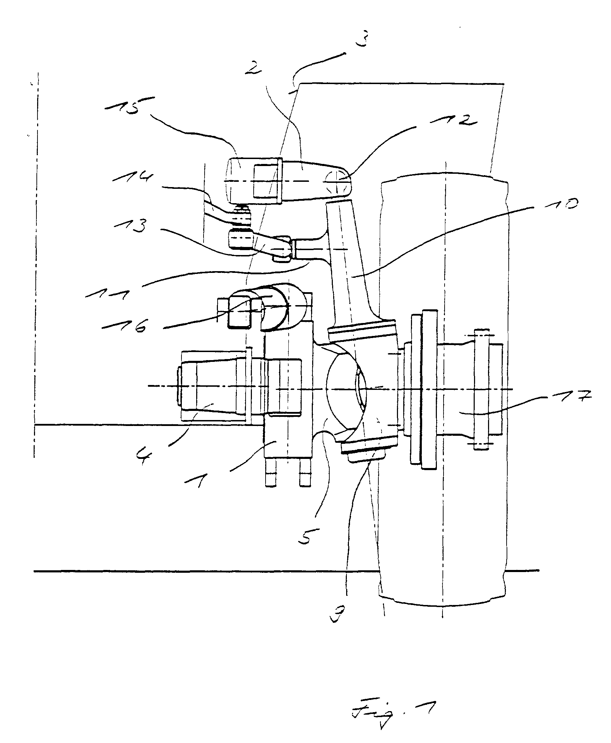

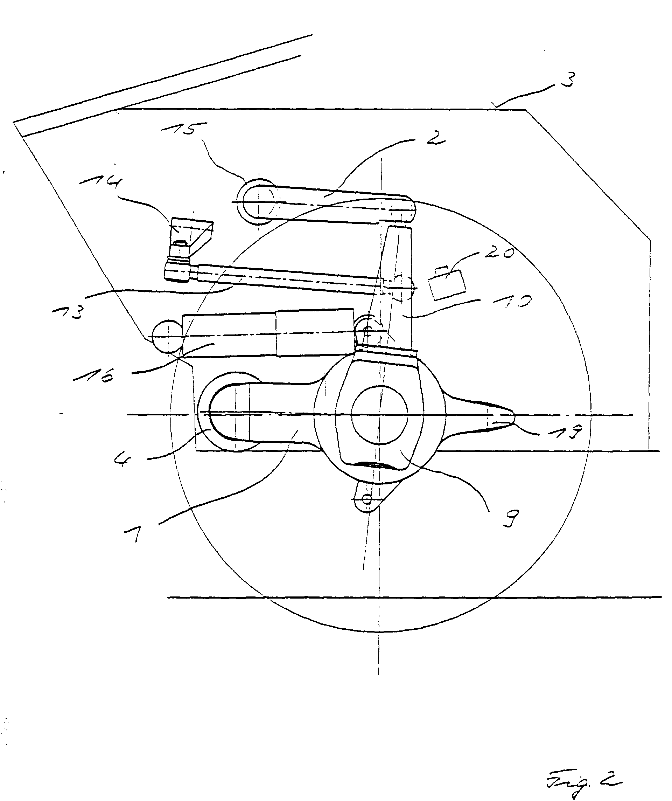

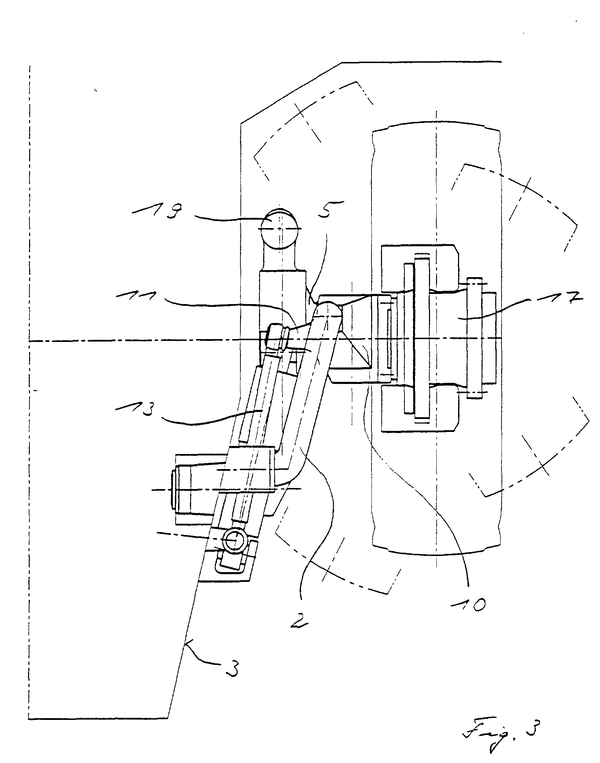

Die Führungslenker der in den Fig. 1,2 und 3 dargestellten Radaufhängung sind als Längslenker 1 und 2 ausgebildet. Der untere Längslenker 1 ist in einer im Fahrzeuggrundkörper 3 befindlichen Drehführung 4 um eine horizontale quer zum Fahrzeug verlaufende Achse schwenkbar angeordnet. Er enthält an dem der Drehführung 4 abgewandten Ende eine Bohrung, in die ein mit einem Hohlraum versehener, im unteren Längslenker 1 drehbarer Achskörper 5 eingefügt ist.

Für die Relativbewegung des Achskörpers 5 im unteren Längslenker 1 sind Kegelrollenlager 6 vorgesehen, die zur Übertragung auch hoher Kräfte besonders geeignet sind. Auf dem außenliegenden Ansatz 7 des Achskörpers 5 befindet sich ein auf Wälzlagern 8 schwenkbares Gelenkgehäuse 9.

Das Gelenkgehäuse 9 ist starr mit einem Verbindergehäuse 10 verbunden, an dem ein im Richtung des Fahrzeuggrundkörpers 3 ragender Lenkhebel 11 und ein vom oberen Längslenker 2 aufgenommenes Kugelgelenk 12 angeformt sind. An den Lenkhebel 11 schließt sich ein Lenkgestänge 13 an, das im wesentlichen parallel zu den Längslenkern 1 und 2 verläuft, und mittels eines Umlenkhebels 14 zu dem im Fahrzeug geschützt liegenden Lenkgetriebe führt.

Der obere Längslenker 2 ist zur Bildung einer Parallelogramm-Radaufhängung in einer am Fahrzeuggrundkörper 3 angeordneten Drehführung 15 schwenkbar.

Zwischen dem Lenkgestänge 13 und dem unteren Längslenker 1 ist ein hydropneumatisches Federungs- und Dämpfungselement 16 angeordnet, das am Fahrzeuggrundkörper 3 und am unteren Längslenker 1 schwenkbeweglich befestigt ist.

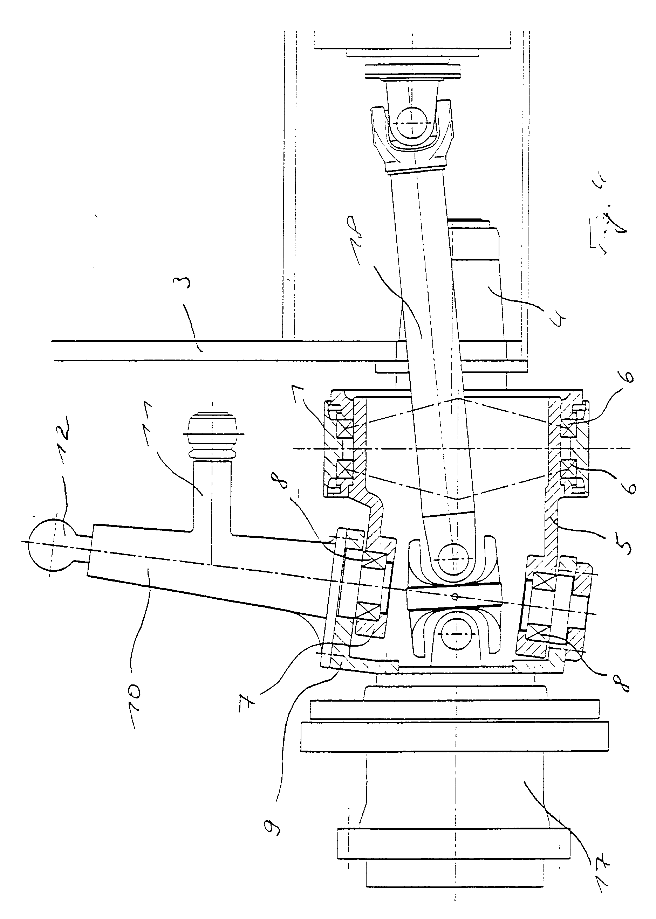

Der Antrieb des mit dem Gelenkgehäuse 9 verbundenen Radkopfes 17 erfolgt in an sich bekannter Weise über die Gelenkwelle 18 (Fig. 4).

Zur Begrenzung des Einfederweges sind am unteren Längslenker 1 und am Fahrzeuggrundkörper 3 Anschläge 19 und 20 vorgesehen.

Der Anschlag 20 besteht aus einem Dämpfungselement mit progressiver Dämpfungskennlinie, so daß die auf den Anschlag 20 einwirkende Kraft stetig und direkt auf den Fahrzeuggrundkörper 3 übertragen und von diesem aufgenommen wird.

## Patentansprüche

1. Radaufhängung für gepanzerte Fahrzeuge mit einem unteren und einem oberen Führungslenker (1,2), die um eine horizontal angeordnete und quer zur Fahrzeuglängsachse verlaufende Achse schwenkbar sind, mit einem Führungssteg der die freien Enden der Führungslenker (1,2) zu einem Führungsrahmen verbindet, an dem das Rad geführt und in einer Vertikalebene auslenkbar ist, mit einem Federungsund mit einem Dämpfungelement (16), welche sich am Fahrzeuggrundkörper (3) abstützen und am Führungsrahmen angreifen, dadurch gekennzeichnet, daß der Führungssteg aus einem im unteren Führungslenker (1) um eine horizontale Achse drehbar gelagerten Achskörper (5), einem auf dem Achskörper (5) zur Erzielung von Lenkeinschlägen schwenkbaren, einen Radkopf (17) tragenden, Gelenkgehäuse (9) und einem starr am Gelenkgehäuse (9) angeordneten Verbindergehäuse (10), das einen nach innen ragenden, mit einem Lenkgestänge (13) verbundenen Lenkhebel (11) aufweist und die Verbindung zum oberen Führungslenker (2) herstellt, gebildet ist.

2. Radaufhängung nach Anspruch 1, dadurch gekennzeichnet, daß das Federungs- und das Dämpfungselement (16) zu einer Baueinheit zusammengeführt sind.

3. Radaufhängung nach Anspruch 1 oder 2, dadurch gekennzeichnet, daß das Federungs- und/oder Dämpfungselement (16) am unteren Führungslenker (1) angreift.

4. Radaufhängung nach Anspruch 1, 2 oder 3, dadurch gekennzeichnet, daß das Federungs- und/oder Dämpfungselement (16) annährend parallel zu den Führungslenkern (1, 2) angeordnet ist.

5. Radaufhängung nach Anspruch 1 , dadurch gekennzeichnet, daß das Lenkgestänge (13) zwischen den Führungslenkern (1,2) und annährend parallel zu diesen verläuft.

6. Radaufhängung nach Anspruch 4, dadurch gekennzeichnet, daß das Lenkgestänge (13) zwischen dem oberen Führungslenker (2) und dem Federungs- und Dämpfungselement (16) angeordnet ist.

7. Radaufhängung nach Anspruch 1, dadurch gekennzeichnet, daß die Führungslenker (1, 2) in unmittelbarer Nähe des Fahrzeuggrundkörpers (3) angeordnet und schwenkbar sind, und daß der sich aus dem unteren Führungslenker (1) auf die dem Fahrzeug abgewandte Seite desselben erstreckende Achskörper (5) ein zur Realisierung von Lenkbewegungen schwenkbares Gelenkgehäuse (9) trägt, an dem ein Verbindergehäuse (10) mit auf den Fahrzeuggrundkörper (3) gerichtetem Lenkhebel (11) angeordnet ist.

8. Radaufhängung nach Anspruch 1, dadurch gekennzeichnet, daß sich die Führungslenker (1, 2), das Lenkgestänge (13) und das Federungs- und/oder Dämpfungselement (16) in einer im wesentlichen vertikal verlaufenden Ebene auf unterschiedlichen Höhenniveaus befinden.

9. Radaufhängung nach Anspruch 1, dadurch gekennzeichnet, daß am Fahrzeuggrundkörper (3) ein den Einfederweg begrenzender Anschlag (20) vorgesehen ist, der mit einem am unteren Führungslenker (1) angeordneten Steg (19) zusammenwirkt.

10. Radaufhängung nach Anspruch 9, dadurch gekennzeichnet, daß der Anschlag (20) als Dämpfungselement mit progressiver Dämpfungskennlinie ausgeführt ist.

## Claims

1. Wheel suspension for armoured vehicles, with a lower and an upper radius arm (1, 2), which can be pivoted about a horizontal axis extending transversely to the longitudinal axis of the vehicle, with a guide link connecting the free ends of the radius arms (1, 2) to a guide frame, at which the wheel is guided and can be deflected in a vertical plane, with a suspension and with a damping element (16), which are supported at the basic vehicle body (3) and act on the guide frame, characterised in that the guide link is formed from an axle body (5), which is mounted in the lower radius arm (1) so as to rotate about a horizontal axis, an articulated housing (9), which can pivot on the axle body (5) to achieve steering angles and bears a wheel head (17), and a connector housing (10), which is disposed rigidly on the articulated housing (9), comprises an inward projecting steering lever (11), which is connected to a steering linkage (13), and establishes the connection with the upper radius arm (2).

2. Wheel suspension according to Claim 1, characterised in that the suspension and the damping element (16) are combined to form a unit.

3. Wheel suspension according to Claim 1 or 2, characterised in that the suspension and/or damping element (16) act/(s) on the lower radius arm (1).

4. Wheel suspension according to Claim 1, 2 or 3, characterised in that the suspension and/or damping element (16) is/are disposed approximately parallel to the radius arms (1, 2).

5. Wheel suspension according to Claim 1, characterised in that the steering linkage (13) extends between the radius arms (1, 2) and approximately parallel to these.

6. Wheel suspension according to Claim 4, characterised in that the steering linkage (13) is disposed between the upper radius arm (2) and the suspension and damping element (16).

7. Wheel suspension according to Claim 1, characterised in that the radius arms (1, 2) are disposed in the immediate vicinity of the basic vehicle body (3) and are pivotable, and that the axle body (5), which extends from the lower radius arm (1) to the side of the latter which is remote from the vehicle, bears an articulated housing (9) which can be pivoted to achieve steering movements and on which a connector housing (10) with a steering lever (11) directed towards the basic vehicle body (3) is disposed.

8. Wheel suspension according to Claim 1, characterised in that the radius arms (1, 2), the steering linkage (13) and the suspension and/or damping element (16) are located at different levels in a substantially vertical plane.

9. Wheel suspension according to Claim 1, characterised in that a stop (20) is provided on the basic vehicle body (3) to limit the spring excursion, which stop co-operates with a web (19) disposed on the lower radius arm (1).

10. Wheel suspension according to Claim 9, characterised in that the stop (20) is constructed as a damping element with a progressive damping characteristic.

## Revendications

1. Suspension de roue pour véhicules blindés, comportant un bras oscillant inférieur de guidage (1) et un bras oscillant supérieur de guidage (2), qui peuvent pivoter autour d'un axe disposé horizontalement et s'étendant transversalement à l'axe longitudinal du véhicule, comportant une entretoise de guidage qui relie les extrémités libres des bras oscillants de guidage (1, 2) en un cadre de guidage sur lequel est guidée la roue qui peut être déviée dans un plan vertical, comportant un élément de suspension élastique et un élément d'amortissement (16) qui prennent appui sur le corps de base (3) du véhicule et qui agissent sur le cadre de guidage, caractérisée en ce que l'entretoise de guidage est constituée d'un corps d'axe (5) monté dans le bras oscillant de guidage inférieur (1) de manière à pouvoir tourner autour d'un axe horizontal, d'un boîtier d'articulation (9) qui porte une tête de roue (17) et qui peut pivoter sur le corps d'axe (5) pour obtenir des braquages, ainsi que d'un boîtier de liaison (10) qui est disposé rigidement sur le boîtier d'articulation (9) et qui comporte un levier de direction dépassant vers l'intérieur et relié à une timonerie de direction (13), et qui réalise la liaison avec le bras oscillant de guidage supérieur (2).

2. Suspension de roue selon la revendication 1, caractérisée en ce que l'élément de suspension élastique et l'élément d'amortissement (16) sont réunis en un ensemble.

3. Suspension de roue selon la revendication 1 ou 2, caractérisée en ce que l'élément de suspension élastique et/ou l'élément d'amortissement (16) agit sur le bras oscillant inférieur de guidage (1).

4. Suspension de roue selon la revendication 1, 2 ou 3, caractérisée en ce que l'élément de suspension élastique et/ou l'élément d'amortissement (16) est disposé approximativement parallèlement aux bras oscillants de guidage (1,2).

5. Suspension de roue selon la revendication 1, caractérisée en ce que la timonerie de direction (13) s'étend entre les bras oscillants de guidage (1, 2) et approximativement parallèlement à ceux-ci.

6. Suspension de roue selon la revendication 4, caractérisée en ce que la timonerie de direction (13) est disposée entre le bras oscillant supérieur de guidage (2) et l'élément de suspension élastique et l'élément d'amortissement (16).

7. Suspension de roue selon la revendication 1, caractérisée en ce que les bras oscillants de guidage (1, 2) sont disposés à proximité immédiate du corps de base (3) du véhicule et peuvent pivoter, et en ce que le corps d'axe (5), qui s'étend depuis le bras oscillant de guidage inférieur (1) sur le côté de celui-ci tourné à l'opposé du véhicule, supporte un boîtier d'articulation (9), qui peut pivoter pour réaliser des mouvements de direction et sur lequel est disposé un boîtier de liaison (10) avec levier de direction (11) dirigé vers le corps de base (3) du véhicule.

8. Suspension de roue selon la revendication 1, caractérisée en ce que les bras oscillants de guidage (1, 2), la timonerie de direction (13) et l'élément de suspension élastique et/ou élément d'amortissement (16) se trouvent dans le plan sensiblement vertical, à différents niveaux de hauteur.

9. Suspension de roue selon la revendication 1, caractérisée en ce qu'il est prévu sur le corps de base (3) du véhicule une butée (20) qui limite la course de compression des ressorts et qui coopère avec une ailette (19) disposée sur le bras oscillant inférieur de guidage (1).

10. Suspension de roue selon la revendication 9, caractérisée en ce que la butée (20) est réalisée en tant qu'élément d'amortissement avec courbe caractéristique d'amortissement progressive.
